# EUROPEAN PATENT SPECIFICATION

(11) **EP 2 265 839 B1**
(45) Date of publication and mention of the grant of the patent: **21.09.2011**
(21) Application number: 09722463.8
(22) Date of filing: 09.03.2009
(51) Int. Cl.: F16D 55/36, F16D 65/847

(54) **AIR-COOLED PNEUMATICALLY-ACTUATED BRAKE WITH REDUCED DIAMETER MULTIPLE DISCS, PARTICULARLY FOR INDUSTRIAL APPLICATIONS**
LUFTGEKÜHLTE, DRUCKLUFTBETÄTIGTE BREMSE MIT EINEN VERRINGERTEN DURCHMESSER AUFWEISENDEN MEHREREN SCHEIBEN, INSBESONDERE FÜR INDUSTRIELLE ANWENDUNGEN
FREIN À ACTIONNEMENT PNEUMATIQUE REFROIDI PAR AIR DOTÉ DE MULTIPLES DISQUES DE DIAMÈTRE RÉDUIT, EN PARTICULIER À DES FINS INDUSTRIELLES

(30) Priority: 19.03.2008 IT MI20080472
(43) Date of publication of application: 29.12.2010
(73) Proprietor: Re, Ugo Jacopo, 20132 Milano (IT)
(72) Inventor: Re, Ugo Jacopo, 20132 Milano (IT)
(74) Representative: Modiano, Micaela Nadia
(86) International application number: PCT/EP2009/052695
(87) International publication number: WO 2009/115417

(56) References cited:
- EP-A- 0 461 398
- US-A- 3 664 467
- US-A- 4 846 315
- US-A1- 2002 020 601

## Description

### Technical Field

The present invention relates to an air-cooled pneumatically-actuated brake with reduced diameter multiple discs, particularly for industrial applications.

### Background Art

It is known to mount pneumatically-actuated brakes which are applied to the load-bearing axles of industrial applications, such as for example unwinders.

Unwinders are designed to unroll with constant tension flexible rolled products wound in rolls to allow the process for converting them.

Such tensioning work is performed by making the brake disc slip continuously on the corresponding friction shoes, modulating the values of its braking torque with a pneumatic actuation system.

Generally a ventilation system is provided for dissipating the heat generated by friction, so as to limit overheatings of the components of the brake and consequent damage of the friction materials.

Up to now, these applications have commonly resorted to the use of simple brakes with a single central disc, in which the braking torque is obtained by way of a pneumatic actuation system constituted by a variable number of multiple calipers installed at the peripheral region of the disc.

For heat dissipation of this known type of brake, a fan is mounted which, by generating an air stream with an axial direction with respect to the disc, is designed to cool it together with the friction materials.

These braking units are always used with continuous slipping; this causes an increase in the temperatures, on which both the duration of the friction materials and of the discs, and the preservation of an appropriate friction coefficient for controlling the braking torque, depend.

In single-disc brakes, it is evident that all the generated heat has no way to be dissipated completely, because a single element is provided which has limited heat exchange surfaces and is insufficient for the task.

Indeed, high operating temperatures on the slippage surfaces are always observed in single-disc brakes and cannot be lowered in any manner.

The components of these assemblies, therefore, must work in the presence of high and constant temperature values, which by experience are on the order of hundreds of degrees.

These values proportionally reduce the strength of the friction materials, with consequent rapid wear thereof, damaging the slippage surfaces and varying the friction coefficient.

All this has a negative effect on functionality and torque adjustment.

Moreover, the forced use of large-diameter discs in order to increase the heat exchange surfaces entails an increase in the peripheral speeds at which the friction materials must work.

This parameter has a negative influence on the wear of the friction materials, in addition to the effect caused by the high temperatures.

These known brakes are not devoid of additional drawbacks, which include the fact that since such brakes are always used in continuous slippage on plants that operate in a continuous cycle 24 hours a day, operators are forced to perform constant monitoring of the wear of the individual calipers, which are different one another, and to perform preventive maintenance, stopping the system.

Another drawback suffered by known brakes consists in that restoring the initial conditions entails replacing both the pads and the metallic discs, and this corresponds ultimately to replacement of an entire brake. It is necessary to add to these costs the downtimes required for disassembly, reassembly and cleaning.

Another drawback suffered by known brakes resides in that the braking torque that can be transmitted by the brake corresponds to the sum of the braking torques generated by the individual calipers, which are extremely variable with respect to each other due to the different behavior of the friction materials and also due to the different wears.

These different wears are in fact uneven due to the difference in the temperatures observed on the side of the disc that is struck directly by the cooling air stream and the temperatures observed on the opposite side, since the cooling air stream does not reach the latter side sufficiently.

Yet another drawback suffered by known brakes resides in that the constant wear of the friction materials releases fine particles, which are extremely harmful for the environment and at the same time contaminate the rolled products being processed, causing a deterioration of their quality.

Still another drawback suffered by known brakes consists in that the pneumatic actuation on the brakes is divided over a plurality of calipers, and therefore their number must be selected in order to set the torque ratio in order to complete any unwinding cycle.

This procedure must be performed manually by the operators, according to their experience, both before and during the processes, taking into account all the process variables, such as for example different tensions of the ribbon and different diameters and width of the rolls.

The same variables are considered for changing the parameters that affect the torques, the heat and the unevenness of wear.

The calculated braking torque may no longer be adequate following change in the value of the operating variables during the operation of the brake; this causes difficulty in controlling ribbon tension, where maintaining its constancy is decisive for product quality purposes.

Document EP 0461398 discloses an air-cooled pneumatically-actuated brake according to the preamble of claim 1.

### Disclosure of the Invention

The aim of the present invention is to eliminate the drawbacks noted above, by providing an air-cooled pneumatically-actuated brake with reduced diameter multiple discs, particularly for industrial applications, that works at reduced operating temperatures with respect to known brakes so as to reduce the wear of the brake.

Within this aim, an object of the present invention is to provide a pneumatic brake that allows a continuous variation of the braking torque.

Another object of the present invention is to provide a pneumatic brake that is compact, so as to reduce the mechanical stresses of the components of the brake.

This aim and these and other objects that will become better apparent hereinafter are achieved by an air-cooled pneumatically-actuated brake with reduced diameter multiple discs according to claim 1.

### Brief Description of the Drawings

Further characteristics and advantages of the present invention will become apparent from the description of a preferred but not exclusive embodiment of an air-cooled pneumatically-actuated brake with reduced diameter multiple discs, particularly for industrial applications, according to the invention, illustrated by way of non-limiting example in the accompanying drawings, wherein:

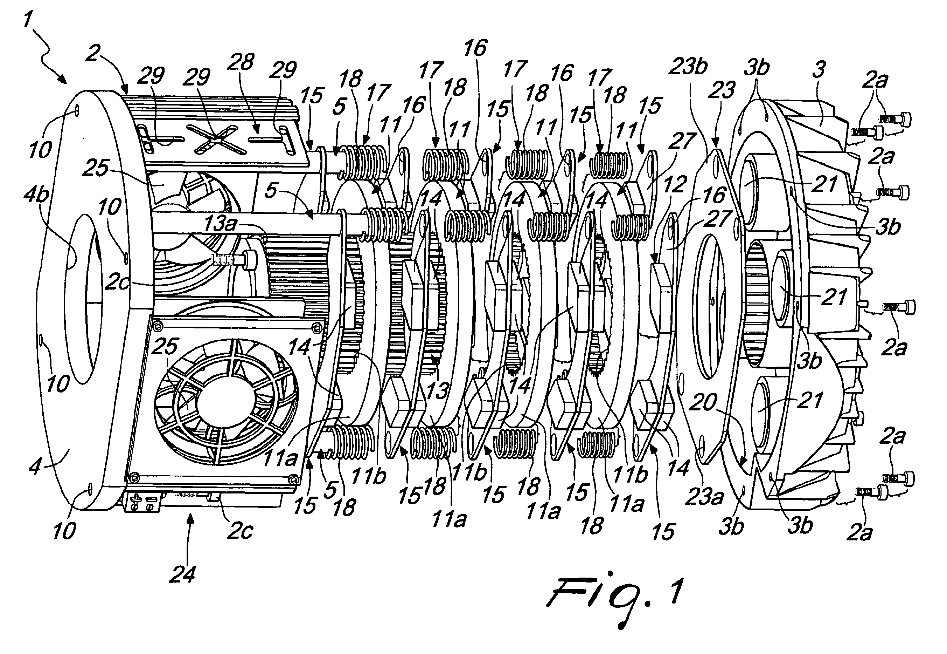

Figure 1 is an exploded perspective view of an air-cooled pneumatically-actuated brake with reduced diameter multiple discs, particularly for industrial applications, according to the present invention;

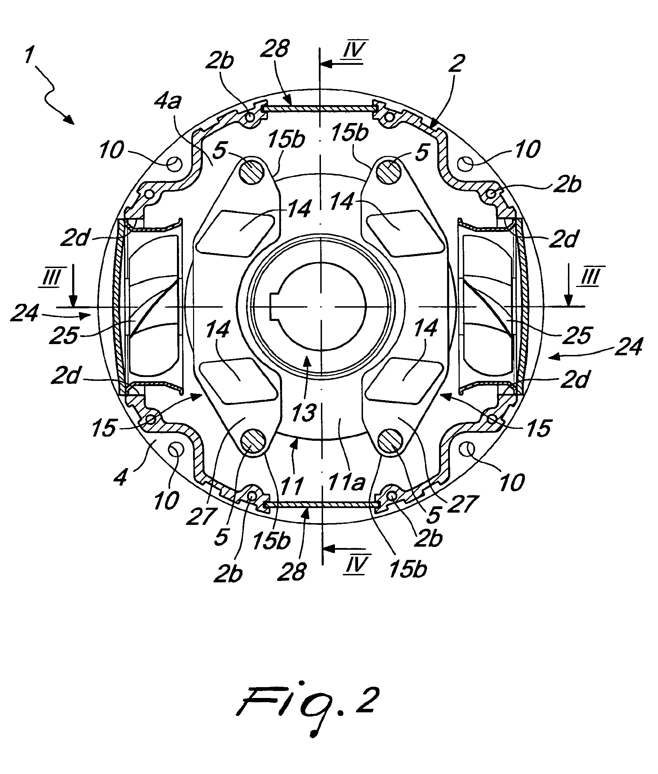

Figure 2 is a sectional view, taken along a radial plane, of the brake shown in Figure 1;

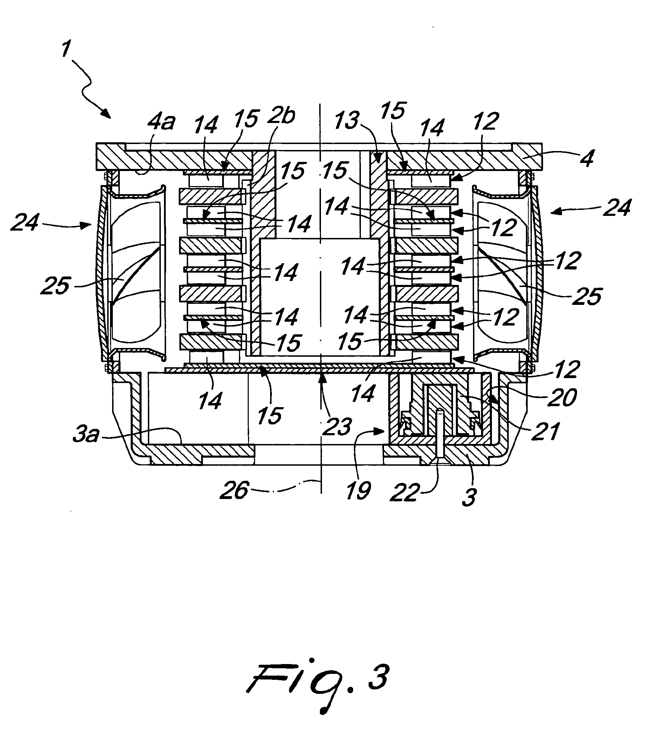

Figure 3 is a sectional view of the brake shown in Figure 2, taken along the line III-III;

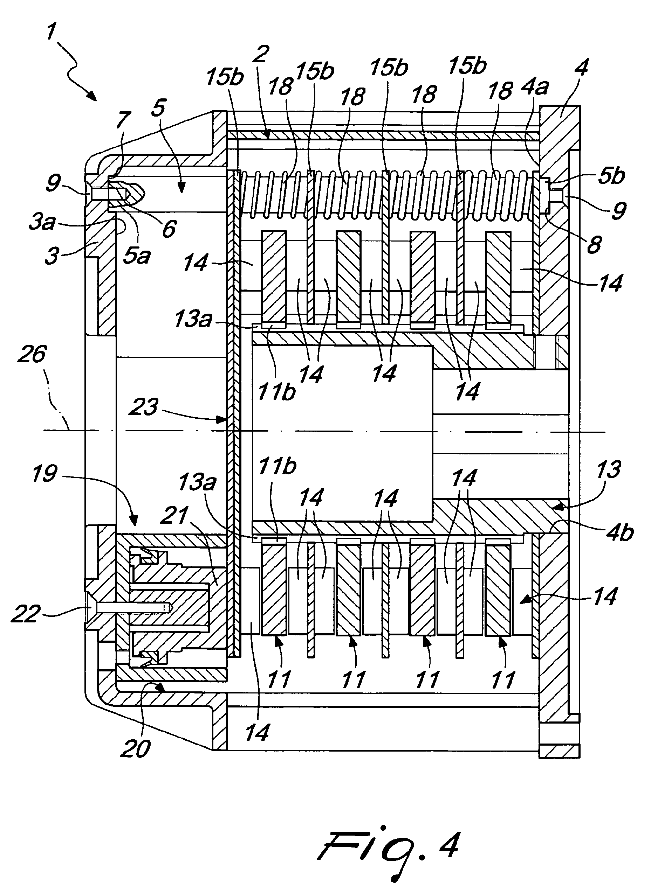

Figure 4 is a sectional view of the brake shown in Figure 2, taken along the line IV-IV.

### Ways of carrying out the Invention

With reference to the figures, the air-cooled pneumatically-actuated brake with reduced diameter multiple discs, particularly for industrial applications, generally designated by the reference numeral 1, comprises a main body 2 that encloses the fixed and movable elements of the brake.

The main body 2 is associated with a front cover 3 and with a rear flange 4, both of which have a substantially circular plan shape.

The main body 2 is fixed to the front cover 3 by means of first screws 2a, which are inserted in threaded holes 2b formed in the main body 2 and in holes 3b formed in the front cover 3, abutting against the outer surface of the front cover 3.

The front cover 3 and the rear flange 4 face each other and are jointly connected to each other by rods 5, which are oriented parallel to each other and are jointly connected to end faces 3a and 4a that face each other, respectively, of the front cover 3 and of the rear flange 4.

The rods 5, in the embodiment being considered, are four in number and have a cylinder cross-section with a threaded hole 6 for each end.

The rods 5 are arranged at the corners of a square and, as will be described hereinafter, act as guiding elements for the movable elements of the brake.

The mutual fixing of the rods 5 and of the front cover 3 and the rear flange 4 is achieved by inserting by abutment the ends 5a and 5b of the rods 5, respectively, in abutment holes 7 and 8 provided on the end faces 3a and 4a.

Fixing is completed by means of screws 9, which engage the threaded holes 6.

The main body 2 can be fixed to a fixed portion of a machine or the like, which is not shown in the figures, for example, by means of screws 2c that can be inserted in holes 10 provided in the rear flange 4.

The rear flange 4 further comprises a central hole 4b for the passage of the shaft to be braked of the machine.

The braking action of the brake 1 is provided by the coupling of a plurality of mutually coaxial discs 11 and of a plurality of friction elements 12 interposed between the discs 11.

In the illustrated embodiment, the discs 11 are four in number. Nevertheless, they may vary in number from a minimum of two to a maximum number that can be defined according to the design requirements.

A slotted hub 13 is fitted on the discs 11 so that it can slide with respect to their common axis 26, which coincides with the axis of the shaft to be braked, and can be keyed on the shaft to be braked by way of per se known mechanical couplings, such as for example forced couplings, couplings with keys/tongues, etc.

The hub 13 has an outer slotted profile 13a to engage the corresponding inner slotted profiles 11b provided on the discs 11, coupling them jointly with the rotation of the shaft.

The plurality of discs 11 is arranged inside the main body 2, between the front cover 3 and the rear flange 4.

More precisely, the discs 11 have an outside diameter that is inscribed in the region delimited externally by the rods 5 that are arranged around the axis 26, i.e., of the hub 13, and of the discs 11, and are parallel to the axis 26.

The friction elements 12 can slide axially with respect to the shaft to be braked along the axis 26 to engage the discs 11 by moving into contact with the faces 11 a of the discs 11 during braking and to separate therefrom if needed.

The friction elements 12 are jointly connected for rotation to the main body 2.

The friction elements 12 comprise pads 14 fixed to pad supports 15 interleaved with the discs 11.

The pad supports 15 have guiding holes 16 for the sliding insertion of the rods 5, which accordingly act as guiding elements.

The pad supports 15 are substantially semicircular and wrap at least partially around the hub 13.

In the embodiment shown in the figures, there are two pad supports 15 that work as a pair on the faces 11 a of the discs 11 on diametrically opposite regions of the disc 11.

The pairs of pad supports 15 are interposed between each pair of mutually facing discs 11, between the front cover 3 and the disc 11 that faces the front cover 3 and between the rear flange 4 and the disc that faces the rear flange 4.

In the embodiment shown in the figures, the guiding holes 16 are two in number for each pad support 15 and are provided on the end portions 15b of the pad supports 15.

The friction elements 12 are kept in the open position, i.e., in the position that defines the non-braking step, when the discs 11 are not in contact with the friction elements 12, by elastic means, which comprise a plurality of compression assemblies 17, one for each of the discs 11.

The compression assemblies 17 comprise helical springs 18, which are fitted so that they can slide around the rods 5.

The springs 18 are interposed between each pair of adjacent pad supports 15.

Taken individually, the assemblies 17 comprise springs 18 with mutually identical elastic coefficients.

Differently, the springs 18 have different elastic coefficients depending on the assembly 17 to which they belong.

More precisely, the elastic coefficients of the springs 18 are variable by varying at least one of the parameters comprised among: material of the spring, diameter of the wire of the spring, stroke of the spring, number of useful turns of the spring, and number of packed turns of the spring.

This differentiation is suitable to generate a different elastic reaction force for each of the assemblies 17.

This differentiation allows to sort the assemblies 17 as a function of the value of the elastic reaction force of each individual assembly 17, providing, as will be explained hereinafter, a gradual engagement of the brake 1 with a braking torque that can vary continuously according to the requirements of use.

The braking step is performed by way of actuation means 19 which, by contrasting the action of the elastic means constituted by the assemblies 17, pack the movable elements of the brake 1 and, specifically, move the friction elements 12 into contact with the lateral faces 11a of the discs 11.

The actuation means 19 comprise a plurality of pneumatic actuators, which are accommodated in an appropriately provided seat 20 defined on the front cover 3 and are fixed thereto by means of screws 22.

During braking, the pistons 21 of the pneumatic actuators act on a pusher plate 23, which has a plurality of holes 23a through which the rods 5 are inserted so as to allow the sliding of the pusher plate 23 on the rods 5 along the axis 26.

The pusher plate 23, under the action of the pistons 21 of the pneumatic actuators, engages by contact with one of its front faces 23b the first pair of pad supports 15 that faces the front cover 3 and, again under the action of the pneumatic actuators, the last pair of pad supports 15 that faces the rear flange 4 engages by contact the rear flange 4.

The number of pneumatic actuators, in the embodiment described, is four in number, distributed uniformly on the front cover 3, so as to generate a uniform thrust on the pusher plate 23.

However, the number of pneumatic actuators can be changed according to design requirements.

According to the invention, the brake 1 comprises means 24 for generating an air stream, which are associated with the main body 2 and can be actuated to generate at least one air stream that is adapted to strike the discs 11 and is oriented radially with respect to the discs 11.

The air generation means 24 comprise at least two mutually opposite fans 25, which are arranged at ventilation channels formed between the components of the brake 1.

More precisely, for each face 27 of the pad supports 15 that face the discs 11 there are at least two pads 14 arranged so that they are spaced from each other to form at least one radial ventilation channel at the air stream produced by the generation means 24.

More precisely, the pads 14 are arranged proximate to the guiding holes 16 and there are two mutually opposite ventilation channels.

In order to optimize the cooling of the discs 11 and of the pads 14, the fans 25 are mounted in appropriately provided seats 2d formed in the main body 2, so as to be arranged proximate to the discs 11 to be cooled.

Externally, the brake 1 can be completed by lateral covering elements 28 of the main body 2, which form air vents 29 for the auxiliary emission of the cooling air.

Operation of the air-cooled pneumatically-actuated brake 1 with multiple discs, particularly for industrial applications, according to the present invention, is evident from what has been described and illustrated.

Particularly, the use of compression assemblies 17 provided with springs 18 with different elastic coefficients according to the compression assembly 17 to which they belong, under the action of the pistons 21 of the pneumatic actuators that push the pusher plate 23, packing the movable members of the brake 1, allows to couple the discs 11 sequentially depending on the extent of the pneumatic force adopted once the elastic reaction force of the individual compression assemblies 17 of springs 18 has been exceeded.

By doing so, the continuous variation of the braking torque with a single feed of air is obtained, without further refinements.

With this type of brake, the actuation of the pneumatic actuators requires a relatively low operating pressure compared to that of known brakes, which ranges from 0.2 bars to 6 bars.

The use of multiple discs 11 with a thin cross-section and of pads 14 arranged in a peripheral position allows to have a large amount of space available which is evenly distributed among these elements and allows the passage of two mutually opposite air streams for the combined action of the double fans 25.

The generated stream allows to cool uniformly all the numerous work surfaces without the occurrence of overheating phenomena, keeping the temperatures at very low levels and without stressing thermally the friction materials at all, allowing their operation with near-zero wears, in combination with the reduced peripheral speeds.

The end result is that the friction coefficient and the work braking torques are maintained constant in any application and at any speed of operation.

In practice it has been found that the air-cooled pneumatically-actuated brake with reduced diameter multiple discs, according to the present invention, fully achieves the intended aim and objects, since it allows to keep the operating temperatures of the discs at lower levels than those of known brakes, so as to allow the friction material of the pads to work without thermal stresses, ensuring a wear that is close to zero.

Another advantage of the brake according to the present invention consists in that small-diameter discs have been used which have a solid cross-section and a low thickness, so as to prevent the cooling air from being centrifuged without contrasting the air that originates from the fans.

Another advantage of the brake according to the present invention consists in that it cools uniformly the discs on the two sides thanks to the presence of the mutually opposite double fans.

Another advantage of the brake according to the present invention consists in that the thermal power due to the heat is dispersed on a plurality of elements, so as to have available a large number of heat exchange surfaces that are subjected to the cooling of the air stream generated by the fans.

Another advantage of the brake according to the present invention resides in that the mechanical stresses induced in the materials have been reduced thanks to a reduced diameter and a consequent low peripheral speed of the discs.

Another advantage of the brake according to the present invention consists in that it allows to apply a braking torque that can be modulated by providing a system for the automatic and progressive sequential engagement of the discs thanks to the presence of the compression assemblies provided with springs with different elastic coefficients from one group to the other.

The air-cooled pneumatically-actuated brake with reduced diameter multiple discs, particularly for industrial applications, thus conceived, is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An air-cooled pneumatically-actuated brake with reduced diameter multiple discs, particularly for industrial applications, comprising:
- a main body,(2) which can be fixed to a fixed portion of a machine or the like;
- a plurality of mutually coaxial discs (11), which are jointly connected for rotation about a common axis (26) to a shaft to be braked of said machine and can slide axially with respect to said shaft along said common axis (26);
- a plurality of friction elements (12), which can slide axially with respect to said shaft along said common axis (26), are jointly connected for rotation to said main body (2) and can engage the lateral faces (11 a) of said discs;
- actuation means (19) for moving said friction elements into contact with the lateral faces (11a) of said discs (11);
- means (24) for generating an air stream, which are associated with the main body (2) and are adapted to generate at least one air stream that is adapted to strike said discs (11),
**characterized in that** it further comprises elastic means (17) that are adapted to keep said friction elements (12) in the open position, i.e., not in contact with said discs (11), said actuation means (19) being further adapted to contrast action of said elastic means (17),
and **in that** said friction elements (12) comprise pad supports (15) interleaved with said discs (11), said pad supports (15) having at least two pads (14) fixed on each face (27) thereof that faces said discs (11), so as to be spaced from each other and to form at least one ventilation channel for said air stream that extends radially with respect to said common axis (26),
and **in that** said air generation means (24) comprise at least two mutually opposite fans (25) arranged at said at least one radial ventilation channel so that said air stream generated by said fans (25) is oriented radially with respect to said discs (11).

2. The brake according to claim 1, **characterized in that** said main bod (2) is associated with a rear flange (4) that can be connected to said fixed portion of said machine and defines a central hole (4b) for the passage of said shaft, said rear flange (4) facing a front cover (3) and being jointly connected to said front cover (3) by rods (5) that are oriented parallel to said common axis (26).

3. The brake according to the preceding claims, **characterized in that** said discs (11) are inserted so that they can slide on a slotted hub (13) that can be keyed onto said shaft to be braked, said discs (11) having an inner slotted profile (11b) that can be coupled to the profile (13a) of said slotted hub (13) and having an outside diameter that is substantially inscribed in the region delimited externally by said rods (5).

4. The brake according to one of the claims 2 or 3, **characterized in that** said pad supports (15) are supported slidingly by said rods (5) and are interleaved between said discs (11).

5. The brake according to one or more of the preceding claims, **characterized in that** said pad supports (15) are substantially semicircular, wrap at least partially around said hub (13), and comprise guiding holes (16) that engage slidingly said rods (5).

6. The brake according to one or more of the claims 2-5, **characterized in that** it comprises pairs of said pad supports (15) which are diametrically opposite and are interposed between each pair of said mutually facing discs (11), between said front cover (3) and the disc (11) that faces said front cover (3) and between said rear flange (4) and the disc (11) that faces said rear flange (4).

7. The brake according to one or more of the preceding claims, **characterized in that** it comprises elements (28) for lateral covering of said main body (2), which define air vents (29) for the auxiliary emission of the cooling air.

8. The brake according to claim 7, **characterized in that** said fans (25) are arranged in seats (2d) formed in said main body (2) so as not to protrude therefrom and to be arranged proximate to the discs (11) to be cooled.

9. The brake according to one or more of the claims 2-8, **characterized in that** said elastic means comprise a plurality of compression assemblies (17), one for each one of said discs (11), which comprise helical springs (18) interposed between each pair of adjacent pad supports (15), said springs (18) being fitted slidingly on said rods (5).

10. The brake according to claim 9, **characterized in that** said springs (18) belonging to a same compression assembly (17) have identical elastic coefficients.

11. The brake according to claim 9, **characterized in that** said springs (18) have different elastic coefficients depending on the compression assembly (17) to which they belong.

12. The brake according to one of the claims 10 or 11, **characterized in that** said elastic coefficient is variable by varying at least one of the parameters comprised among: material of the spring (18), diameter of the wire of the spring, stroke of the spring, number of useful turns of the spring and number of packed turns of the spring (18) to generate an elastic reaction force that is different for each one of said compression assemblies (17).

13. The brake according to one or more of the preceding claims, **characterized in that** said actuation means (19) comprise a plurality of pneumatic actuators (21), which are accommodated in at least one appropriately provided seat (20) defined in said front cover (3) and act on a pusher plate (23) that can perform a translational motion slidingly on said rods (5) and can engage by resting contact, under the action of said actuators (21), with one of its front faces, said pair of said pad supports (15) that face said front cover (3).

14. The brake according to one or more of the claims 6-13, **characterized in that** said pair of said pad supports (15) that face said rear flange (4), under the action of said actuators (21), can engage by resting contact said rear flange (4).

## Patentansprüche

1. Eine luftgekühlte, druckluftbetätigte Bremse mit mehreren Scheiben, die einen verringerten Durchmesser aufweisen, insbesondere für industrielle Anwendungen, die Folgendes umfasst:
- einen Hauptkörper (2), der an einem festen Abschnitt einer Maschine oder dergleichen befestigt werden kann,
- eine Vielzahl miteinander koaxialer Scheiben (11), die zur Drehung um eine gemeinsame Achse (26) mit einem zu bremsenden Schaft der Maschine gemeinsam verbunden sind und entlang der gemeinsamen Achse (26) axial zu dem Schaft gleiten können,
- eine Vielzahl von Reibungselementen (12), die entlang der gemeinsamen Achse (26) axial zu dem Schaft gleiten können, zum Zwecke der Drehung gemeinsam mit dem Hauptkörper (2) verbunden sind, und in die seitlichen Flächen (11a) der Scheiben eingreifen können,
- Betätigungsmittel (19), um die Reibungselemente in Kontakt mit den seitlichen Flächen (11a) der Scheiben (11) zu bewegen,
- Mittel (24) zur Erzeugung eines Luftstroms, die mit dem Hauptkörper (2) verknüpft sind und ausgebildet sind, um mindestens einen Luftstrom zu erzeugen, der geeignet ist, auf die Scheiben (11) zu treffen,
**dadurch gekennzeichnet, dass** sie weiter elastische Mittel (17) umfasst, die ausgebildet sind, um die Reibungselemente (12) in der offenen Position, d. h. nicht im Kontakt mit den Scheiben (11), zu halten, wobei die Betätigungsmittel (19) weiter ausgebildet sind, um der Wirkung der elastischen Mittel (17) entgegenzuwirken,
und **dadurch**, dass die Reibungselemente (12) Auflager-Stützen (15) umfassen, die mit den Scheiben (11) verschachtelt sind, wobei die Auflager-Stützen (15) mindestens zwei Auflager (14) haben, die an jeder Fläche (27) davon, die zu den Scheiben (11) hin weist, befestigt sind, so dass sie voneinander beabstandet sind und so dass sie mindestens einen Belüftungskanal für den Luftstrom bilden, der radial zu der gemeinsamen Achse (26) verläuft,
und **dadurch**, dass die Lufterzeugungsmittel (24) mindestens zwei einander gegenüberliegende Lüfter (25) umfassen, die an dem mindestens einen radialen Belüftungskanal angeordnet sind, so dass der von den Lüftern (25) erzeugte Luftstrom radial zu den Scheiben (11) ausgerichtet ist.

2. Die Bremse gemäß Anspruch 1, **dadurch gekennzeichnet, dass** der Hauptkörper (2) mit einem hinteren Flansch (4) verknüpft ist, der mit dem festen Abschnitt der Maschine verbunden werden kann und ein zentrales Loch (4b) für das Hindurchdringen des Schafts bestimmt, wobei der hintere Flansch (4) einer vorderen Abdeckung (3) gegenüberliegt und durch Stangen (5), die parallel zu der gemeinsamen Achse (26) ausgerichtet sind, gemeinsam mit der vorderen Abdeckung (3) verbunden ist.

3. Die Bremse gemäß den obigen Ansprüchen, **dadurch gekennzeichnet, dass** die Scheiben (11) so aufgesetzt sind, dass sie auf einer mit Schlitzen versehenen Nabe (13) gleiten können, die mit dem zu bremsenden Schaft verkeilt werden kann, wobei die Scheiben (11) ein mit Schlitzen versehenes Innenprofil (11b) haben, das mit dem Profil (13a) der mit Schlitzen versehenen Nabe (13) gekoppelt werden kann, und einen Außendurchmesser haben, der im Wesentlichen in den Bereich einbeschrieben ist, welcher außen von den Stangen (5) begrenzt wird.

4. Die Bremse gemäß einem der Ansprüche 2 oder 3, **dadurch gekennzeichnet, dass** die Auflager-Stützen (15) verschiebbar durch die Stangen (5) gestützt werden und zwischen den Scheiben (11) verschachtelt sind.

5. Die Bremse gemäß einem oder mehreren der obigen Ansprüche, **dadurch gekennzeichnet, dass** die Auflager-Stützen (15) im Wesentlichen halbkreisförmig sind, die Nabe (13) zumindest teilweise umgeben und Führungslöcher (16) umfassen, welche in die Stangen (5) verschiebbar eingreifen.

6. Die Bremse gemäß einem oder mehreren der Ansprüche 2-5, **dadurch gekennzeichnet, dass** sie Paare der Auflager-Stützen (15) umfasst, die einander diametral entgegengesetzt liegen und zwischen jedem Paar der einander gegenüberliegenden Scheiben (11) angeordnet sind, zwischen der vorderen Abdeckung (3) und der Scheibe (11), die zur vorderen Abdeckung (3) hin weist, und zwischen dem hinteren Flansch (4) und der Scheibe (11), die zu dem hinteren Flansch (4) hin weist.

7. Die Bremse gemäß einem oder mehreren der obigen Ansprüche, **dadurch gekennzeichnet, dass** sie Elemente (28) zur seitlichen Bedeckung des Hauptkörpers (2) umfasst, die Entlüftungsschlitze (29) zur Hilfs-Emission der Kühlluft bestimmen.

8. Die Bremse gemäß Anspruch 7, **dadurch gekennzeichnet, dass** die Lüfter (25) in Sitzen (2d) angeordnet sind, die in dem Hauptkörper (2) geformt sind, so dass sie nicht daraus herausragen und nahe den zu kühlenden Scheiben (11) angeordnet sind.

9. Die Bremse gemäß einem oder mehreren der Ansprüche 2-8, **dadurch gekennzeichnet, dass** die elastischen Mittel eine Vielzahl von Kompressionsbaugruppen (17), eine für jede der Scheiben (11), umfassen, die Schraubenfedern (18) umfassen, welche zwischen jedem Paar von benachbarten Auflager-Stützen (15) angeordnet sind, wobei die Federn (18) verschiebbar auf die Stangen (5) aufgesetzt sind.

10. Die Bremse gemäß Anspruch 9, **dadurch gekennzeichnet, dass** die Federn (18), die zu derselben Kompressionsbaugruppe (17) gehören, identische Elastizitätskoeffizienten haben.

11. Die Bremse gemäß Anspruch 9, **dadurch gekennzeichnet, dass** die Federn (18) verschiedene Elastizitätskoeffizienten haben, abhängig von der Kompressionsbaugruppe (17), zu der sie gehören.

12. Die Bremse gemäß einem der Ansprüche 10 oder 11, **dadurch gekennzeichnet, dass** der Elastizitätskoeffizient durch Veränderung mindestens eines der folgenden Parameter verändert werden kann: Material der Feder (18), Durchmesser des Drahts der Feder, Hub der Feder, Anzahl nützlicher Windungen der Feder und Anzahl komprimierter Windungen der Feder (18), zur Erzeugung einer elastischen Rückstellkraft, die sich bei jeder der Kompressionsbaugruppen (17) unterscheidet.

13. Die Bremse gemäß einem oder mehreren der obigen Ansprüche, **dadurch gekennzeichnet, dass** die Betätigungsmittel (19) eine Vielzahl von pneumatischen Aktoren (21) umfassen, die in mindestens einem geeignet bereitgestellten Sitz (20) untergebracht sind, der in der vorderen Abdeckung (3) bestimmt ist, und die auf eine Schubplatte (23) wirken, die verschiebbar entlang der Stangen (5) eine translatorische Bewegung ausführen kann und durch Ruhekontakt unter der Wirkung der Aktoren (21) mit einer ihrer Vorderflächen in das Paar der Auflager-Stützen (15) eingreifen kann, die zur vorderen Abdeckung (3) hin weisen.

14. Die Bremse gemäß einem oder mehreren der Ansprüche 6-13, **dadurch gekennzeichnet, dass** das Paar der Auflager-Stützen (15), die zu dem hinteren Flansch (4) hin weisen, unter der Wirkung der Aktoren (21) durch Ruhekontakt in den hinteren Flansch (4) eingreifen kann.

## Revendications

1. Frein à refroidissement par air à fonctionnement pneumatique, muni de multiples disques d'un diamètre réduit, comprenant :
- un corps principal (2), qui peut être fixé à une partie fixe d'une machine ou autre ;
- une pluralité de disques mutuellement coaxiaux (11), qui sont réunis, pour tourner autour d'un axe commun (26), à un arbre à freiner de ladite machine et qui peuvent coulisser axialement par rapport audit arbre le long dudit axe commun (26) ;
- une pluralité d'éléments de frottement (12), qui peuvent coulisser axialement par rapport audit arbre le long dudit axe commun (26), sont réunis, pour tourner, audit corps principal (2) et peuvent venir contre les faces latérales (11a) desdits disques ;
un moyen d'actionnement (19) pour faire venir lesdits éléments de frottement au contact des faces latérales (11a) desdits disques (11) ;
- des moyens(24) pour créer un courant d'air, qui sont associés au corps principal (2) et sont conçus pour créer au moins un courant d'air apte à frapper lesdits disques (11),
**caractérisé en ce qu'**il comprend en outre des moyens élastiques (17) conçus pour maintenir lesdits éléments de frottement (12) dans la position ouverte, c'est-à-dire sans contact avec lesdits disques (11), lesdits moyens d'actionnement (19) étant en outre conçus pour contrarier l'action desdits moyens élastiques (17),
et **en ce que** lesdits éléments de frottement (12) comportent des supports (15) de patins imbriqués avec lesdits disques (11), lesdits supports (15) de patins ayant au moins deux patins (14) fixés sur chaque face (27) de ceux-ci orientée vers lesdits disques (11), de manière à être espacés l'un de l'autre et à former, pour ledit courant d'air, au moins un canal de ventilation qui s'étend radialement par rapport audit axe commun (26),
et **en ce que** lesdits moyens de création (24) de courant d'air comportent au moins deux ventilateurs mutuellement opposés (25) disposés dans ledit au moins un canal de ventilation de façon que ledit courant d'air créé par lesdites ventilateur (25) soit orienté radialement par rapport auxdits disques (11).

2. Frein selon la revendication 1, **caractérisé en ce que** ledit corps principal (2) est associé à un flasque arrière (4) qui peut être relié à ladite partie fixe de ladite machine et définit un trou central (4b) pour le passage dudit arbre, ledit flasque arrière (4) étant en regard d'un capot avant (3) et étant réuni audit capot avant (3) par des tiges (5) orientées parallèlement audit axe commun (26).

3. Frein selon les revendications précédentes, **caractérisé en ce que** lesdits disques (11) sont insérés de façon à pouvoir coulisser sur un moyeu rainuré (13) qui peut être claveté sur ledit arbre à freiner, lesdits disques (11) ayant un profil intérieur rainuré (11b) qui peut être accouplé avec le profil (13a) dudit moyeu rainuré (13) et ayant un diamètre extérieur sensiblement inscrit dans la zone délimitée extérieurement par lesdites tiges (5).

4. Frein selon l'une des revendications 2 et 3, **caractérisé en ce que** lesdits supports (15) de patins sont supportés d'une manière coulissante par lesdites tiges (5) et sont imbriqués avec lesdits disques (11).

5. Frein selon une ou plusieurs des revendications précédentes, **caractérisé en ce que** lesdits supports (15) de patins sont sensiblement semi-circulaires, enveloppent au moins partiellement ledit moyeu (13) et comportent des trous de guidage (16) qui coopèrent d'une manière coulissante avec lesdites tiges (5).

6. Frein selon une ou plusieurs des revendications 2 à 5, **caractérisé en ce qu'**il comprend des paires desdits supports (15) de patins qui sont diamétralement opposées et son intercalées entre les disques de chaque paire de disques mutuellement en regard (11), entre ledit capot avant (3) et le disque (11) en regard dudit capot avant (3) et entre ledit flasque arrière (4) et le disque (11) en regard dudit flasque arrière (4).

7. Frein selon une ou plusieurs des revendications précédentes, **caractérisé en ce qu'**il comprend des éléments (28) pour couvrir latéralement ledit corps principal (2), qui définissent des bouches (29) d'air pour l'émission auxiliaire de l'air de refroidissement.

8. Frein selon la revendication 7, **caractérisé en ce que** lesdits ventilateurs (25) sont disposés dans des logements (2d) formés dans ledit corps principal (2) afin de ne pas dépasser de celui-ci et d'être placés tout près des disques (11) à refroidir.

9. Frein selon une ou plusieurs des revendications 2 à 8, **caractérisé en ce que** lesdits moyens élastiques comportent une pluralité d'ensembles de compression (17), un pour chacun desdits disques (11), qui comportent des ressorts hélicoïdaux (18) intercalés entre les supports de chaque paire de supports de patins adjacents (15), lesdits ressorts (18) étant montés de manière à pouvoir coulisser sur lesdites tiges (5).

10. Frein selon la revendication 9, **caractérisé en ce que** lesdits ressorts (18) appartenant à un même ensemble de compression (17) ont le même coefficient d'élasticité.

11. Frein selon la revendication 9, **caractérisé en ce que** lesdits ressorts (18) ont des coefficients d'élasticité différents selon l'ensemble de compression (17) dont ils font partie.

12. Frein selon l'une des revendications 10 et 11, **caractérisé en ce que** ledit coefficient d'élasticité est modifiable en modifiant au moins un des paramètres parmi ; la matière du ressort (18), le diamètre du fil du ressort, la course du ressort, le nombre de spires utiles du ressort et le nombre de spires tassées du ressort (18) afin de créer une force de réaction élastique qui est différente pour chacun desdits ensembles de compression (17).

13. Frein selon une ou plusieurs des revendications précédentes, **caractérisé en ce que** lesdits moyens d'actionnement (19) comportent une pluralité d'actionneurs pneumatiques (21), qui sont logés dans au moins un logement (20) réalisé de manière appropriée, défini dans ledit capot avant (3), et agissent sur une plaque de poussée (23) qui peut exécuter un mouvement de translation en coulissant sur lesdites tiges (5) et, sous l'action desdits actionneurs (21), peut, par l'une de ses faces avant, venir en appui contre ladite paire desdits supports (15) de patins en regard dudit capot avant (3).

14. Frein selon une ou plusieurs des revendications 6 à 13, **caractérisé en ce que** ladite paire desdits supports (15) de patins en regard dudit flasque arrière (4) peut, sous l'action desdits actionneurs (21), venir en appui contre ledit flasque arrière (4).
